# DEMANDE DE BREVET EUROPEEN

(11) **EP 1 087 486 A1**
(43) Date de publication de la demande: **28.03.2001**
(21) Numéro de dépôt: 00440173.3
(22) Date de dépôt: 14.06.2000
(51) Int. Cl.: H02G 3/10

(54) **Adapteur pour appareillage électrique présentant un sens de montage**

(30) Priorité: 24.09.1999 FR 9912106
(71) Demandeur: Rehau S.A., 57340 Morhange (FR)
(72) Inventeur: Stengel, Christian, 57340 Ragrange (FR); Frey, Bertrand, 57340 Ragrange (FR)
(74) Mandataire: Metz, Paul

(57) **Abrégé**

L'adaptateur (1) permet de raccorder l'appareillage à une goulotte horizontale ou verticale, en respectant son sens de montage. Il est constitué de trois éléments distincts :
- une embase (10), rapportée sur la paroi, comportant symétriquement sur trois de ses bords consécutifs des prolongements (21) verticaux, de forme identique définissant un cadre ouvert sur une de ses faces en regard avec la goulotte ;
- un Capot (11), apte à s'emboîter sur l'embase, présentant sur chacune de ses faces latérales une découpe (30) identique et de forme complémentaire à celle des prolongements (21) et comportant sur sa face supérieure un logement (14) pour l'appareillage ;
- un tunnel (12) conformé pour recouvrir une portion de la goulotte, réalisant l'obturation de l'adaptateur en coopérant avec la découpe (30) libre du capot.

Cette invention intéresse les fabricants et les installateurs d'appareillages électriques et de goulottes.

## Description

La présente invention concerne un adaptateur de montage permettant la mise en place et le raccordement à une goulotte de distribution électrique s'étendant verticalement ou horizontalement, d'un appareillage présentant un sens de montage à respecter.

Certains appareillages électriques devant être raccordés à une goulotte, plinthe, moulure ou analogue, possèdent un sens par rapport aux directions horizontale et verticale à respecter au moment du montage. Il s'agit par exemple des prises électriques, interrupteurs ou commutateurs.

Cependant, dans les installations électriques courantes les goulottes peuvent être installées horizontalement ou verticalement en fonction des contraintes et des besoins. De façon classique, elles s'étendent horizontalement lorsqu'elles sont installées en plinthe ou en moulure le long d'un sol ou d'un plafond et verticalement le long de l'angle entre deux murs ou le long d'une porte.

Ces deux directions de goulotte compliquent sérieusement la pose de certains de ces appareillages possédant un sens de montage. En effet, lorsque le contour extérieur de l'appareillage n'est pas symétrique par une rotation de 90°, les adaptateurs classiques ne sont utilisables que pour une seule direction de goulotte. Le problème se pose par exemple avec les appareillages à contour extérieur rectangulaire qui sont très fréquents. L'installateur doit toujours disposer de deux types d'adaptateurs et choisir lequel utiliser selon de l'orientation horizontale ou verticale de la goulotte. Ceci implique que l'installateur possède et stocke un nombre important de pièces pour pouvoir faire face à chaque situation rencontrée. En outre, le risque d'erreur lors de l'achat des pièces est grandement augmenté.

Le but de l'invention est de fournir un adaptateur unique permettant de réaliser très simplement le montage de ce type d'appareillage quelle que soit l'orientation horizontale ou verticale de la goulotte.

Pour résoudre ce problème technique, divers adaptateurs ont été proposés. On connaît par exemple un adaptateur que l'installateur doit préparer avant le montage en effectuant une découpe dans la paroi en regard de la goulotte afin de permettre le passage des fils. Comme elle est réalisée au dernier moment, la découpe est située sur la face appropriée de l'adaptateur en fonction de l'orientation de la goulotte.

Cette opération de découpe préalable complique le montage de l'appareillage et accroît sa durée. De plus, la découpe demande une précision relativement importante afin d'être parfaitement adaptée à la goulotte et de ne pas créer ainsi d'interstices permettant l'entrée de poussières ou d'objets de petite taille.

On connaît également un adaptateur percé de plusieurs ouvertures correspondant aux différentes positions possibles de montage, l'installateur devant obturer au moyen de pièces spécifiques les ouvertures inutilisées.

Le montage de l'appareillage avec un tel adaptateur est là encore beaucoup plus long et compliqué que lorsqu'il est réalisé avec l'adaptateur selon l'invention. En effet, le nombre de pièces à mettre en place est plus important du fait des disparités entre les pièces d'obturation, ces petites pièces pouvant en outre s'égarer facilement.

Une autre solution est divulguée dans la demande FR 2.770.047 au nom de PLANET WATTHOM. Cette demande décrit un adaptateur constitué de trois parties : un socle, un cadre extérieur prolongé par une coiffe latérale permettant le recouvrement d'un tronçon de goulotte en remplacement du couvercle et un cadre intérieur comportant un logement ouvert à contour rectangulaire pour le passage de l'appareillage électrique. Le cadre intérieur présente un contour carré, conformé pour venir s'emboîter sur une bordure du cadre extérieur selon deux positions décalées angulairement de 90°, permettant ainsi de réaliser deux configurations de montage en fonction de l'orientation de la goulotte.

On peut grâce à cet adaptateur installer l'appareillage près d'une goulotte horizontale ou verticale en respectant son sens de montage. Cependant, le cadre extérieur se prolongeant par la coiffe latérale forme un ensemble rigide responsable de certains désavantages. La coiffe recouvre la portion de goulotte et empêche l'accès à son espace intérieur très tôt au cours des opérations de montage, gênant la préhension et le passage des conducteurs électriques, ainsi que la réalisation des branchements avec l'appareillage.

La rigidité de cet élément pose problème lorsque la paroi, servant de support à la goulotte et à l'adaptateur, présente des défauts géométriques de planéité et d'équerrage avec sa voisine pouvant conduire à des problèmes d'alignement ou de dévers. Cette situation est fréquemment rencontrée, surtout dans le cadre de rénovations et est encore aggravée avec des panneaux de grande taille. Du fait de la rigidité de sa structure, l'adaptateur ne peut compenser ces défauts géométriques. Des interstices inesthétiques et dangereux pour le matériel et l'utilisateur, car laissant passer des poussières ou les objets de petite taille, risquent alors d'apparaître.

L'adaptateur selon l'invention présente également deux configurations de montage lui permettant de s'adapter à l'orientation de la goulotte. Cependant, grâce à une structure différente, le montage et le raccordement des conducteurs sont facilités. En outre, l'adaptateur permet avantageusement de compenser les problèmes dus aux défauts géométriques de la paroi. Le nombre de pièces constitutives de l'adaptateur n'est toutefois pas augmenté, ce qui permet un coût de fabrication modique et une mise en place aisée et rapide du dispositif.

Pour résoudre le problème technique précédemment évoqué, le dispositif selon l'invention comporte essentiellement les moyens suivants : une embase, un capot et un tunnel.

L'embase, apte à être rapportée sur la paroi à proximité de la goulotte, est par exemple de forme carrée. Elle comporte sur trois de ses bords consécutifs des prolongements en oreille, présentant un contour de forme identique et s'élevant verticalement chacune sur une portion symétrique de chacun de ces trois bords. Ces oreilles forment trois parois non jointives définissant un cadre, apte à loger le mécanisme de l'appareillage, ouvert sur l'une de ses faces correspondant au côté de l'embase situé en regard de la goulotte afin de permettre le passage des fils.

Le capot est conformé pour venir s'emboîter sur l'embase. Il présente sur chacune de ses faces latérales une découpe identique et de forme complémentaire à celle de chacune des oreilles de l'embase. Il comporte sur sa face supérieure un logement apte à recevoir la partie supérieure de l'appareillage.

Le tunnel est un élément indépendant des deux précédents. Il recouvre une portion de la goulotte en remplacement de son couvercle et réalise l'obturation de l'adaptateur en coopérant avec la découpe libre du capot.

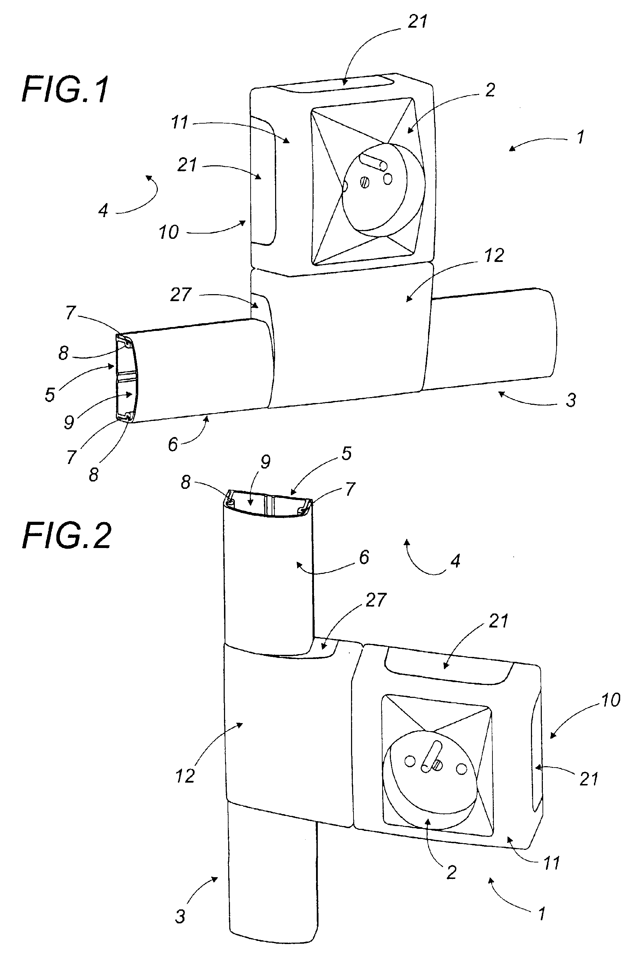

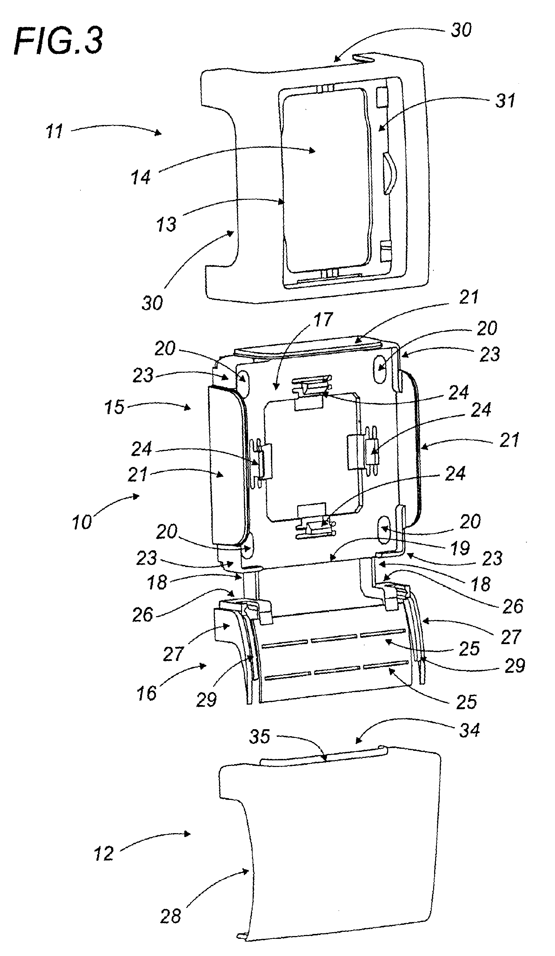

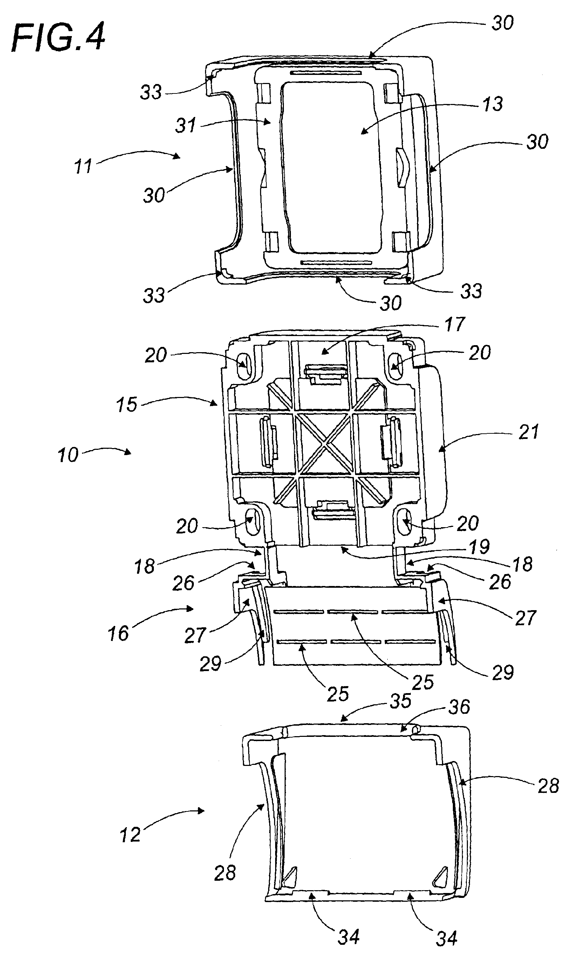

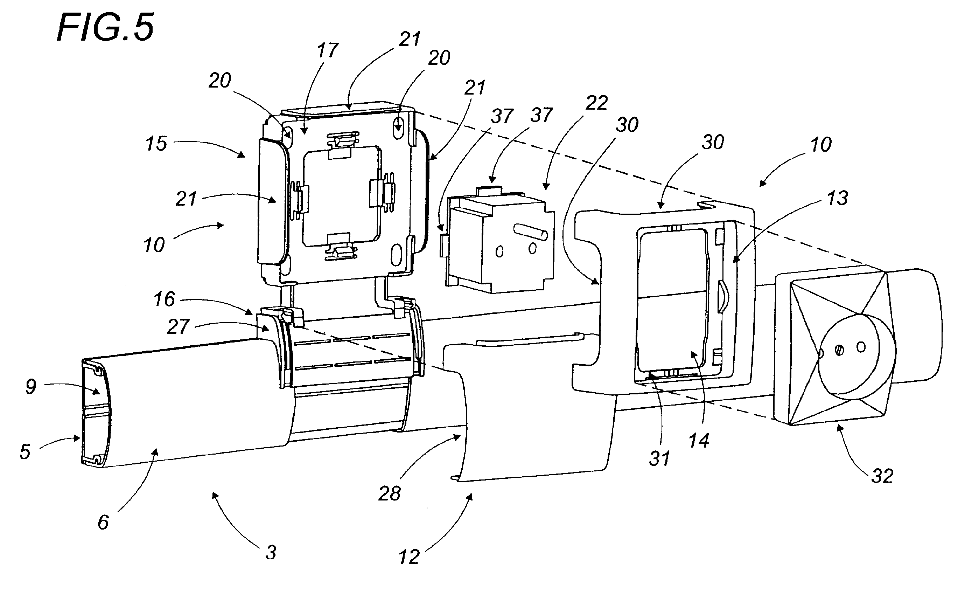

D'autres caractéristiques et avantages de l'invention apparaîtront à la lecture de la description détaillée qui va suivre, description faite en référence aux dessins annexés, dans lesquels :
. la figure 1 est une vue générale en perspective, une fois le montage terminé, d'un exemple d'utilisation de l'adaptateur selon l'invention pour le raccordement d'une prise à une goulotte horizontale de distribution électrique ;
. la figure 2 est une vue en perspective similaire à la figure 1, illustrant le montage d'une prise électrique à l'aide de l'adaptateur selon l'invention en bordure d'une goulotte s'étendant verticalement ;
. la figure 3 est une vue en perspective éclatée de l'avant des trois pièces constitutives de l'adaptateur selon l'invention ;
. la figure 4 est une vue en perspective éclatée de l'arrière des trois pièces constitutives de l'adaptateur ;
. la figure 5 est une vue en perspective éclatée illustrant le montage des différents éléments de l'adaptateur selon l'invention et d'une prise électrique en bordure d'une goulotte s'étendant horizontalement.

L'adaptateur de montage selon la présente invention va maintenant être décrit de façon détaillée en référence aux figures 1 à 5. Les éléments équivalents représentés sur les différentes figures porteront les mêmes références numériques.

Les figures 1 et 2 illustrent un exemple d'application d'un adaptateur 1 selon la présente invention pour le montage d'une prise électrique 2 en bordure d'une goulotte 3.

La goulotte 3 est rapportée sur une paroi 4 horizontalement sur la figure 1 et verticalement sur la figure 2. Elle est constituée de façon classique d'un socle 5 à section de forme générale en U et d'un couvercle 6 à section également de forme générale en U venant recouvrir le socle 5. Le couvercle 6 se fixe par encliquetage sur le socle 5, au moyen de nervures 7 coopérant avec les rainures 8 du socle, de manière à fermer la goulotte et à définir un espace intérieur 9 creux dans lequel sont placés des conducteurs électriques, téléphoniques, informatiques ou autre.

L'adaptateur 1 est rapporté sur la paroi 4 en bordure de la goulotte 3. Il comprend trois éléments : une embase 10, un capot 11 et un tunnel 12 qui seront décrits en détail par la suite.

Le capot 11 présente sur sa face supérieure une ouverture 13 dont le contour correspond à la forme périphérique de l'appareillage à monter afin de réaliser un logement 14 pour recevoir l'arrière de cet appareillage. Dans le mode de réalisation représenté, l'ouverture 13 et l'appareillage 2 sont de forme rectangulaire. L'invention n'est pas évidemment limitée à une forme de logement rectangulaire, celle-ci pouvant être modifiée pour correspondre à la forme de l'appareillage. De même, l'adaptateur peut sans sortir du cadre de l'invention permettre le raccordement de nombreux autres appareillages, tels que par exemple des interrupteurs, commutateurs ou de tout autre appareillage possédant où non un sens de montage, bien que son utilisation soit plus particulièrement avantageuse pour les premiers.

Le capot 11 est conformé pour s'emboîter sur l'embase 10 de l'adaptateur 1 selon deux configurations possibles afin de s'adapter à l'orientation de la goulotte et de respecter le sens de montage de l'appareillage. Cette adaptation s'effectue très facilement par une simple rotation du capot 11 d'un angle de 90° avant de l'emboîter sur l'embase 10. On peut ainsi obtenir sans aucune difficulté les deux configurations de l'adaptateur représentées successivement sur les figures 1 et 2.

Les différents moyens constitutifs d'un mode de réalisation préférentiel de l'adaptateur selon l'invention vont maintenant être décrits de façon détaillée en référence aux figures 3 et 4.

L'embase 10 comprend une partie supérieure 15 servant de cadre support d'appareillage et une partie inférieure 16 remplissant la fonction de bouclier passe-fils.

La partie supérieure 15 est constituée d'une paroi de fond 17, par exemple, de forme carrée. Elle présente deux prolongements 18 en L, partant du bord inférieur 19 et reliant solidairement les deux parties de l'embase. L'embase comporte également des moyens permettant de rapporter l'adaptateur sur la paroi 4 en bordure de la goulotte. Il s'agit par exemple dans ce mode de réalisation de classiques trous oblongs 20 situés aux quatre coins du cadre support 15.

Elle comporte en outre sur trois de ses bords consécutifs des prolongements en oreille 21, présentant un contour de forme identique et s'élevant verticalement chacune sur une portion symétrique par une rotation de 90° de chacun de ces trois bords. Dans ce mode de réalisation, les oreilles 21 se situent au milieu des bords de l'embase et possèdent une forme sensiblement rectangulaire à angles supérieurs arrondis. Ces oreilles 21 forment trois parois non jointives définissant un cadre, apte à loger le mécanisme 22 de l'appareillage 2, ouvert sur une de ses faces correspondant au bord 19 de l'embase et situé en regard de la goulotte afin de permettre le passage des conducteurs.

Des nervures 23, placées légèrement en retrait vers l'intérieur, peuvent border les quatre coins de la partie support 15 de l'embase et relier les oreilles 21, renforçant la rigidité du cadre et coopérant avec le capot 11 pour réaliser la fermeture hermétique de l'adaptateur.

Le cadre support 15 présente des moyens pour immobiliser la partie mécanisme 22 de l'appareillage. Dans l'exemple représenté, il s'agit de quatre structures unitaires de clipsage 24 disposées sur la paroi de fond 17 de l'embase selon une conformation de carré dont elles matérialisent le milieu des quatre côtés.

Le bouclier passe-fils 16 présente une forme par exemple rectangulaire sensiblement parallèle à la paroi de fond 17 de l'embase à laquelle il est relié par les prolongements 18 en L. Lorsque l'embase est mise en place sur la paroi, ce bouclier couvre une partie de la portion de goulotte couverte. Avantageusement, l'installateur peut très facilement ménager dans ce bouclier un passage pour les conducteurs, de dimensions et de localisation appropriées à l'aide, par exemple, des deux lignes telles que 25 d'amorce de découpe en pointillés.

Le bouclier 16 comporte à chacune de ses extrémités latérales une fine patte 26 se prolongeant par une paroi 27 globalement perpendiculaire à la surface du bouclier. Ces parois 27 sont conformées pour venir partiellement obturer la découpe 28 réalisée dans la face latérale correspondante du tunnel 12. Elles sont à cet effet surmontées d'une nervure en retrait 29 apte à venir s'encastrer sous la paroi latérale d'extrémité du tunnel. Les bords inférieurs de ces parois 27 viennent s'appuyer sur et recouvrir les extrémités des tronçons de couvercle 6 de la goulotte 3.

L'installateur peut, au moyen d'une pince, très facilement couper les pattes 26 ou les prolongements 18 en L dans l'une ou l'autre des parties du L. Il peut ainsi, avantageusement, enlever les parois 27 afin d'adapter l'adaptateur de montage à un deuxième modèle de goulotte de taille supérieure et/ou supprimer la partie bouclier 16 de l'embase.

Le capot 10 vient s'emboîter sur la partie supérieure 15 de l'embase de façon à obturer le haut de l'adaptateur et à délimiter un espace intérieur creux apte à recevoir le mécanisme 22 de l'appareillage. Il comporte sur chacune de ses quatre faces latérales, une découpe 30 identique et de forme complémentaire aux trois oreilles 21 de l'embase. Il présente en outre dans sa partie supérieure l'ouverture 13 et un rebord périphérique 31, délimitant le logement 14, par exemple rectangulaire, permettant de recevoir la partie supérieure 32 de l'appareillage, capuchon de bloc-prise électrique ou bouton d'actionnement d'interrupteur par exemple.

La forme générale du capot et ses découpes latérales 30 étant symétriques par rotation de 90°, le capot peut être positionné sur l'embase indifféremment dans deux configurations différentes, le logement rectangulaire 14 du capot étant dirigé selon une direction sensiblement parallèle ou perpendiculaire à la goulotte. L'installateur peut ainsi d'une façon aisée et rapide respecter le sens de montage de l'appareillage par une simple rotation du capot 11.

Dans le mode de réalisation représenté, le capot 11 est maintenu sur l'embase par encliquetage au moyen de quatre ergots d'encliquetage 33. Cependant, ce maintien peut évidemment être réalisé par tout autre moyen sans sortir du cadre de l'invention.

Le tunnel 12 est conformé pour recouvrir la partie découverte de la goulotte, les découpes latérales 28 permettant le passage du socle 5 et des extrémités des tronçons de couvercle 6 de la goulotte 3. Il peut par exemple être maintenu au moyen, entre autre, de pattes 34 qui coopèrent avec la rainure 8 de la goulotte.

Le tunnel 12 comporte en outre sur sa face supérieure une découpe 35, située en regard de la découpe 30 libre du capot, permettant le passage des conducteurs vers l'intérieur de l'adaptateur en vue de leur raccordement avec le mécanisme 22 de l'appareillage. La découpe 35 peut avantageusement être bordée d'une nervure 36 venant s'encastrer sous le capot dans la découpe libre 30 et évitant la pénétration dans l'adaptateur de poussières ou de corps étrangers.

Chacune des trois parties constitutives de l'adaptateur selon l'invention peut être fabriquée en une seule pièce, sans difficulté pour l'homme du métier, par un procédé classique de moulage par injection.

Le montage d'un appareillage électrique à l'aide de l'adaptateur selon la présente invention est très simple et découle à l'évidence de la description précédente. Ce montage illustré sur la figure 5 va maintenant être succinctement décrit.

Après avoir enlevé une portion de couvercle de la goulotte 3, l'installateur rapporte l'embase 10 de l'adaptateur en bordure sur la goulotte et la fixe contre la paroi 4, par exemple à l'aide de quatre vis enfilées à travers les trous oblongs 20.

Il met en place le mécanisme 22 de l'appareillage, comportant les contacts et les bornes de raccordement, contre la paroi de fond 17 de l'embase. Le solidarisation du mécanisme est réalisée par encliquetage grâce à la coopération des prolongements 37 du mécanisme et des dents de clipsage 24 de l'embase.

L'installateur fait passer les conducteurs à travers le passage de fil préalablement découpé dans le bouclier 16 de l'embase et réalise les raccordements nécessaires. Ces opérations de branchement sont grandement facilitées par rapport aux dispositifs de l'art antérieur, car l'accès aux conducteurs électriques et au mécanisme 22 est total, le capot et le tunnel n'ayant pas encore été mis en place.

L'installateur positionne ensuite le tunnel 12 sur la portion découverte de la goulotte, puis le capot 10 sur la partie supérieure de l'embase, dans la configuration angulaire appropriée en fonction de l'orientation horizontale ou verticale de la goulotte. Il ne reste plus ensuite qu'à fixer la partie supérieure 32 de l'appareillage dans le logement 14 du capot 10 de l'adaptateur.

Le capot et le tunnel étant réalisés en deux pièces distinctes, l'adaptateur selon l'invention n'est pas rigide. Cette caractéristique permet avantageusement de compenser et de cacher les défauts géométriques de la paroi et les problèmes de planéité relative entre la goulotte et l'embase. L'apparition d'interstices, inesthétiques et responsables de la pénétration de poussières ou de corps étrangers, est ainsi évitée.

## Revendications

1. Adaptateur de montage pour appareillage électrique présentant un sens de montage, pour le montage de celui-ci en bordure d'une goulotte horizontale ou verticale, du genre comportant
. une embase (10) munie de moyens (20) permettant sa fixation à une paroi ,
. un capot (11) conformé pour venir s'emboîter sur l'embase définissant un espace intérieur apte à recevoir le mécanisme (22) de l'appareillage (2) et comportant sur sa face supérieure un logement (14) susceptible de recevoir la partie supérieure (32) de l'appareillage (2) présentant un sens de montage, et
. un tunnel (12) conformé pour recouvrir la portion découverte de la goulotte,
caractérisé en ce que l'embase comporte trois prolongements en oreilles (21) et en ce que le capot présente sur chacune de ses faces latérales une découpe (30) identique et de forme complémentaire à chacune des oreilles (21) permettant au capot de s'emboîter sur l'embase dans l'une ou l'autre de deux configurations possibles et décalée angulairement de 90°.

2. Adaptateur de montage selon la revendication précédente caractérisé en ce que, lorsque le capot (11) est emboîté sur l'embase (10), la découpe (30) libre du capot permet le passage des conducteurs provenant de la goulotte vers l'espace intérieur de l'adaptateur.

3. Adaptateur de montage selon l'une quelconque des revendications précédentes caractérisé en ce que un tunnel (12) coopère avec la découpe (30) libre du capot (11) pour réaliser l'obturation de l'adaptateur dans sa partie inférieure.

4. Adaptateur de montage selon la revendication précédente caractérisé en ce que le tunnel (12) comporte une découpe (35) située en regard de la découpe (30) libre du capot et bordée par une nervure (36) venant s'encastrer sous le capot dans la découpe libre (30) pour réaliser l'obturation de l'adaptateur.

5. Adaptateur de montage selon l'une quelconque des revendications précédentes caractérisé en ce que l'embase (10) comporte deux parties (15) et (16) :
. un cadre support (15) pour l'appareillage, recevant le capot (11) ; et
. un bouclier passe-fils (16) s'étendant au dessus du socle de la goulotte, sous le tunnel (12).

6. Adaptateur de montage selon la revendication précédente caractérisé en ce que les prolongements en oreilles (21) s'élèvent du milieu de trois des bords du cadre support (15) et présentent une forme sensiblement rectangulaire à angles supérieurs arrondis.

7. Adaptateur de montage selon la revendication précédente caractérisé en ce que des nervures (23), placées en retrait vers l'intérieur de l'embase, relient les prolongements en oreilles (21) et bordent les quatre coins du cadre support (15).

8. Adaptateur de montage selon l'une quelconque des revendications 5 à 7 caractérisé en ce que le bouclier passe-fils (16) est relié au cadre support (15) par deux prolongements sécables (18).

9. Adaptateur de montage selon l'une quelconque des revendications 5 à 8 caractérisé en ce que le bouclier passe-fils (16) présente des amorces de découpe (25) permettant de réaliser dans ce bouclier un passage pour les conducteurs.

10. Adaptateur de montage selon l'une quelconque des revendications précédentes caractérisé en ce que l'embase (10) comporte des moyens de fixation (24) du mécanisme (22) de l'appareillage.

11. Adaptateur de montage selon la revendication précédente caractérisé en ce que les moyens de fixation du mécanisme (22) de l'appareillage sont des structures de clipsage (24) situées sur le cadre support (15).

12. Adaptateur de montage selon l'une quelconque des revendications précédentes caractérisé en ce que le capot (11) est immobilisé sur l'embase (10) par encliquetage.

13. Adaptateur de montage selon l'une quelconque des revendications précédentes caractérisé en ce que le capot (11) présente dans sa partie supérieure une découpe (13) et un rebord périphérique (31), délimitant le logement (14) apte à recevoir la partie supérieure (32) de l'appareillage.

14. Adaptateur de montage selon la revendication précédente caractérisé en ce que le logement (14) est de forme rectangulaire.

15. Adaptateur de montage selon l'une quelconque des revendications précédentes caractérisé en ce que le tunnel (12) comporte une découpe (28) sur deux de ses faces latérales opposées permettant le passage de la goulotte (3) et en ce que l'embase (10) comporte deux parois sécables (27) venant partiellement obturer ces découpes (28).

16. Adaptateur de montage selon la revendication précédente caractérisé en ce que les deux parois sécables (27) sont reliées au bouclier passe-fils par deux pattes sécables (26).
